# EUROPEAN PATENT APPLICATION

(11) **EP 2 105 875 A2**
(43) Date of publication of application: **30.09.2009**
(21) Application number: 09004264.9
(22) Date of filing: 25.03.2009
(51) Int. Cl.: G06Q 30/00

(54) **Photograph printing system**

(30) Priority: 27.03.2008 JP 2008084607
(71) Applicant: NORITSU KOKI CO., LTD., Wakayama-shi, Wakayama-ken 640-8550 (JP)
(72) Inventor: Tsuji, Yuki, Wakayama-shi Wakayama-ken 640-8550 (JP); Matsushita, Masayuki, Wakayama-shi Wakayama-ken 640-8550 (JP)
(74) Representative: Müller-Boré & Partner Patentanwälte

(57) **Abstract**

When an order reception unit receives a determination result indicating that a user who has inputted identification information is a registered user, the order reception unit receives an order for photograph printing from the user without prompting the user to input personal information. A photograph printing device then performs photograph printing in accordance with the order received by the order reception unit.

## Description

### BACKGROUND OF THE INVENTION AND RELATED ART STATEMENT

### Field of the Invention:

The present invention relates to a photograph printing system in which a reception device, a management server, and a photograph printing device are connected via a predetermined network.

### Description of the Related Art:

Recently, a reception device for receiving an order for photograph printing from a user is disposed alongside a photograph printing device in a photograph developing store provided in a corner of a large commercial facility such as a supermarket. For example, the user inserts a recording medium such as a smart card storing image data into the reception device and operates the reception device to select desired image data. Thus, an order for photograph printing is placed. Having received the order, the reception device transmits the received order to the photograph printing device, whereupon the photograph printing device performs photograph printing in accordance with the order.

Incidentally, in recent years it has become possible for a user to access an Internet website administered by the photograph developing store from a home personal computer and place an order for photograph printing via the Internet. In this case, when placing an order for the first time, the user inputs personal information, including information specifying a name, an address and a banking institution, into the personal computer, whereupon a member code is issued to the user by the photograph developing store. When the user places an order thereafter using the personal computer, the order can be placed without inputting the personal information.

The printed photographs ordered on the website are either mailed to the home of the user at a later date or received during a visit to a photograph developing store specified by the user.

Further, JP2003-217027 discloses a device for realizing DIY photograph printing, which is disposed in a public facility such as a tourist site, a supermarket, a mass merchandise outlet, or a department store, for example, and which reads a recording medium recorded with image data, prints the read image data, and collects a printing fee from the user.

As well as placing an order for photograph printing from a personal computer, a user to whom a member code has been issued may visit the photograph developing store during a shopping trip to a commercial facility, for example, and use the reception device to order photograph printing.

With a conventional reception device, however, even a user to whom a member code has been issued must input the personal information again when placing an order, and as a result, a great load is placed on the user. Furthermore, JP2003-217027 makes no mention of lightening the input load placed on the user.

### SUMMARY OF THE INVENTION

An object of the present invention is to provide a photograph printing system with which an input load applied to a user when placing an order using a reception device can be reduced greatly.

A photograph printing system according to one aspect of the present invention is a photograph printing system in which a reception device, a management server, and a photograph printing device are connected via a predetermined network, wherein the reception device includes: an identification information reception unit that receives identification information from a user for identifying the user and transmits the identification information to the management server via the network; and an order reception unit that receives an order for photograph printing from the user, the management server includes: a storage unit that stores identification information relating to registered users who have completed member registration in advance in association with personal information relating to each registered user; and a determination unit that determines whether or not the user who inputs the identification information is a registered user by determining whether or not the identification information transmitted from the reception device is stored in the storage unit, and transmits a corresponding determination result to the reception device. After receiving a determination result indicating that the user who inputted the identification information is a registered user, the order reception unit receives the order for photograph printing from the user without prompting the user to input the personal information, and the photograph printing device performs photograph printing in accordance with the order received by the order reception unit.

These and other objects, features and advantages of the present invention will become more apparent upon reading the following detailed description along with the accompanying drawings.

### BRIEF DESCRIPTION OF THE DRAWINGS

Fig. 1 is an overall constitutional diagram of a photograph printing system according to an embodiment of the present invention;
Fig. 2 is an external constitutional diagram of a reception device shown in Fig. 1;
Fig. 3 is a block diagram showing the reception device shown in Fig. 2;
Fig. 4 is a view showing an example of a data structure of personal information;
Fig. 5 is a view showing an example of a data structure of order information;
Fig. 6 is a block diagram of a management server shown in Fig. 1;
Fig. 7 is a view showing an example of a data structure of a customer information database;
Fig. 8 is a block diagram of a terminal device shown in Fig. 1;
Fig. 9 is an external constitutional diagram of a delivery device shown in Fig. 1;
Fig. 10 is an external constitutional diagram of the delivery device shown in Fig. 1;
Fig. 11 is a flowchart showing an operation of the photograph printing system performed during order placement; and
Fig. 12 is a flowchart showing an operation of the photograph printing system performed during payment.

### DETAILED DESCRIPTION OF THE PREFERRED EMBODIMENTS OF THE INVENTION

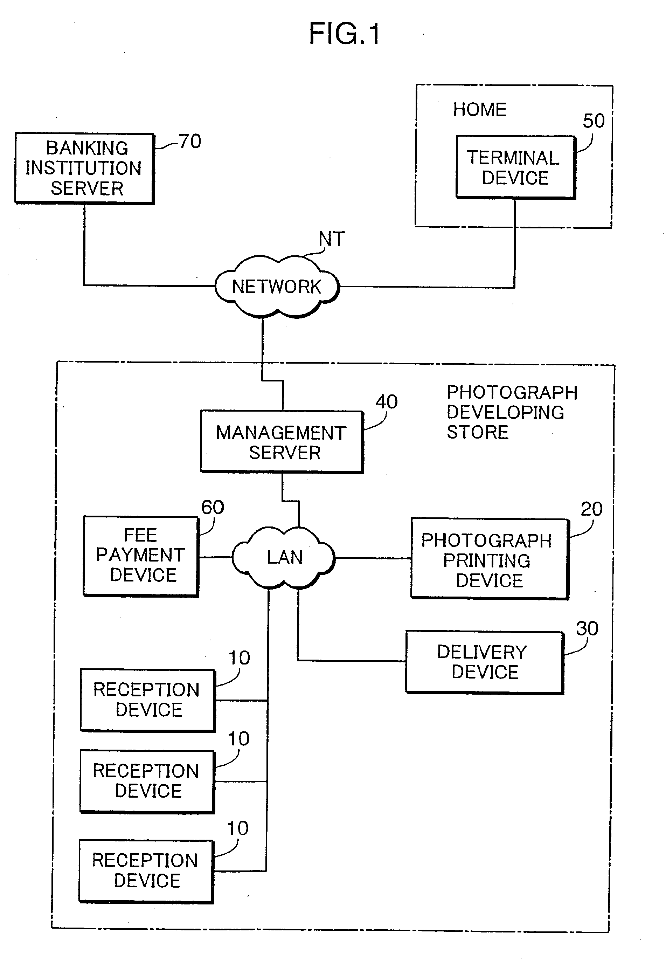

A photograph printing system according to an embodiment of the present invention will be described below with reference to the drawings. Fig. 1 is an overall constitutional diagram of a photograph printing system according to an embodiment of the present invention. The photograph printing system includes a reception device 10, a photograph printing device 20, a delivery device 30, a management server 40, a terminal device 50, and a fee payment device 60.

The reception device 10, photograph printing device 20, delivery device 30, management server 40, and fee payment device 60 are disposed in a photograph developing store, for example, and connected communicably via a LAN (Local Area Network). The terminal device 50 is connected to the management server 40 and a banking institution server 70 via a network NT. Here, the Internet may be employed as the network NT, for example, such that various data are exchanged in accordance with a TCP/IP

### (Transmission Control Protocol/Internet Protocol) communication protocol.

The reception device 10 is a dedicated device for receiving a photograph printing order from a user. Note that in Fig. 1, three reception devices 10 are shown, but the present invention is not limited thereto, and one or a plurality of reception devices 10 may be provided.

The photograph printing device 20 is a device for performing photograph printing in accordance with an order received by the reception device 10 or the terminal device 50. In this embodiment, a device that exposes photographic paper using a laser system or a device that prints an image on paper using an inkjet system, for example, may be employed.

The delivery device 30 is a device for automatically delivering a printed photograph output by the photograph printing device 20 to the user. The management server 40 is constituted by a computer, for example, and is used as a device for performing member registration in relation to a user of the terminal device 50 and managing orders received by the reception device 10 and the terminal device 50.

The terminal device 50 is constituted by a personal computer disposed in the home of the user. The fee payment device 60 is constituted by a fee payment device having a LAN communication function, which collects a printing fee corresponding to an order from the user. The banking institution server 70 is a device managed by a banking institution specified by the user, and is used when the management server 40 performs electronic payment.

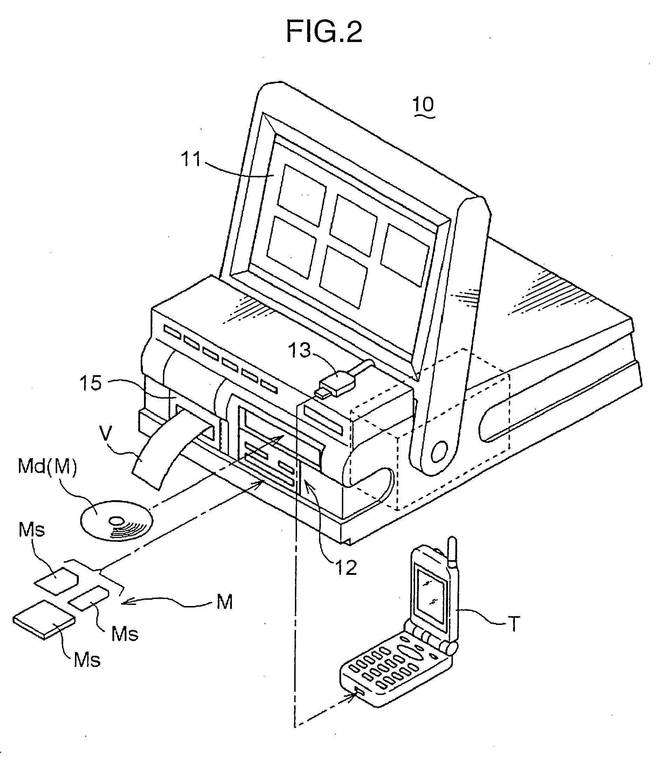

Fig. 2 is an external constitutional diagram of the reception device 10 shown in Fig. 1. As shown in Fig. 2, the reception device 10 includes a display 11, a media drive 12, a connector 13, and a reception voucher printer 15.

The display 11 is constituted by a liquid crystal display device formed with a touch panel on a display surface thereof, for example. The media drive 12 obtains image data from a medium M. In this embodiment, a semiconductor medium Ms such as a compact flash (registered trademark), an SD memory card (registered trademark),or a memory stick (registered trademark) or a disc-shaped medium Md such as a compact disc, a CD-R (CD-Recordable), or an MO (Magnet Optical Disc) may be employed as the medium M. Accordingly, the media drive 12 is constituted by a media drive that corresponds to these respective media M.

The connector 13 is used for connecting a camera-equipped portable telephone T, and obtains image data captured by the portable telephone T. The reception voucher printer 15 issues a reception voucher V proving that an order has been received when the order is received from the user.

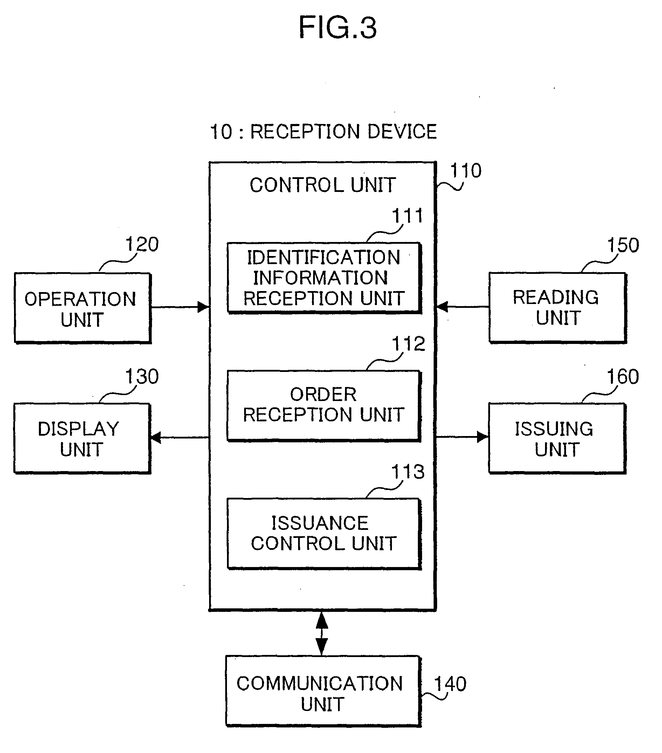

Fig. 3 is a block diagram of the reception device 10 shown in Fig. 2. As shown in Fig. 3, the reception device 10 includes a control unit 110, an operation unit 120, a display unit 130, a communication unit 140, a reading unit 150, and an issuing unit 160.

The control unit 110 is constituted by a CPU (Central Processing Unit), for example, and is responsible for overall control of the reception device 10. In this embodiment in particular, the control unit 110 includes an identification information reception unit 111, an order reception unit 112, and an issuance control unit 113.

The identification information reception unit 111 receives identification information from the user for identifying him/herself, and transmits the received identification information to the management server 40 via the LAN. Here, a member code that is issued by the management server 40 when the user performs member registration may be employed as the identification information. A symbol string allocated uniquely to each user, for example, may be employed as the member code. For example, the identification information may be received by having a registered user input the keys of the member code on the display 11 of the reception device 10 and having an unregistered user input a key indicating that he/she is not a member. The operation to have an unregistered user input a key indicating that he/she is not a member may be omitted. In this case, when the member code is not input, the reception device 10 may determine that the user is not registered and advance to subsequent processing.

When the order reception unit 112 receives a determination result from the management server 40 indicating that the user who inputted the identification information is a registered user, the order reception unit 112 receives a photograph printing order from the user without prompting the user to input personal information. In this case, the registered user can place the photograph printing order without inputting personal information, and therefore the input load is greatly reduced.

On the other hand, when the order reception unit 112 receives a determination result from the management server 40 indicating that the user who inputted the identification information is an unregistered user who has not completed member registration, the order reception unit 112 calculates a printing fee corresponding to the order and displays an image on the display unit 130 requesting payment of the calculated printing fee. In this case, the order reception unit 112 receives the order on condition that the printing fee is paid by the unregistered user using the fee payment device 60 and the personal information of the unregistered user is input.

Note that when the order reception unit 112 receives a determination result from the management server 40 indicating that the user who inputted the identification information is an unregistered user who has not completed member registration, the order reception unit 112 may determine that the user might have inputted his/her identification information incorrectly and prompt the user to input the identification information again.

In this case, the order reception unit 112 may transmit a printing fee payment request to the fee payment device 60 and determine that the printing fee has been paid by the user upon reception of a payment response from the fee payment device 60 indicating that the printing fee has been paid.

The printing fee is calculated by multiplying a predetermined fee for printing a single photograph by the number of images to be printed, for example. Note that registered users may be privileged by setting the printing fee per photograph paid by an unregistered user higher than the printing fee per photograph paid by a registered user.

Further, upon reception of an order, the order reception unit 112 generates order information indicating that an order has been placed, and transmits the generated order information to the management server 40.

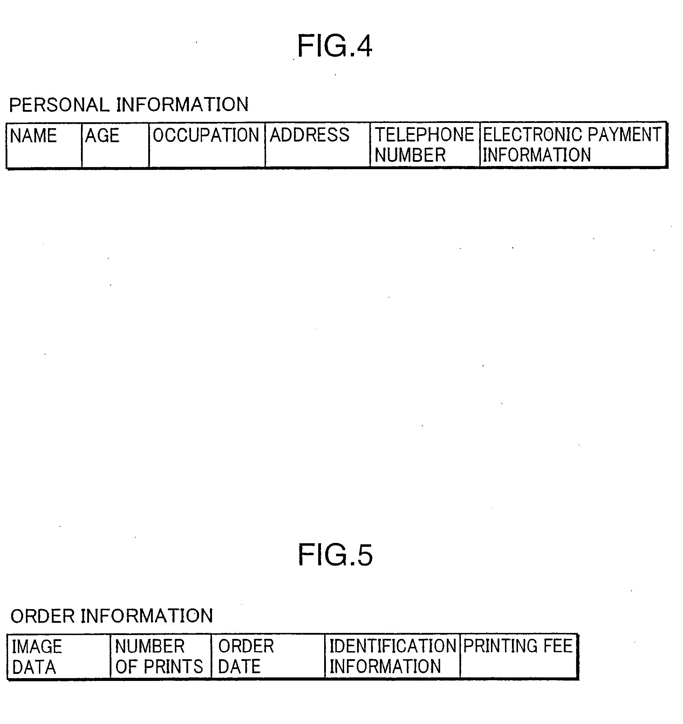

Fig. 4 is a view showing an example of a data structure of the personal information. As shown in Fig. 4, the personal information includes columns relating to a name, an age, an occupation, an address, a telephone number, and electronic payment information of the user. Note that these columns are examples and may be omitted or supplemented with other columns.

Information indicating the name of the user is stored in the name column. Information indicating the age of the user is stored in the age column. Information indicating the address of the user is stored in the address column. Information indicating the telephone number of the user is stored in the telephone number column. Information required for the user to perform electronic payment is stored in the electronic payment information column. The company name of a credit card used by the user, a credit card number, and so on, for example , are included as the electronic payment information.

Fig. 5 is a view showing an example of a data structure of the order information. As shown in Fig. 5, the order information includes columns relating to image data, a number of prints, an order date, identification information, and a printing fee. Note that these columns are examples and may be omitted or supplemented with other columns.

Image data read by the reading unit 150 is stored in the image data column. Information indicating the number of prints of each set of image data stored in the image data column is stored in the print number column. A time, day, month, and year of the order is stored in the order date column. The identification information of the user who placed the order is stored in the identification information column. A printing fee serving as the value of the order is stored in the printing fee column.

Returning to Fig. 3, after transmitting the order information to the management server 40, the order reception unit 112 receives an order response that relates to the order corresponding to the order information from the management server 40. Here, information such as an order number attached to the order by the management server 40 is included in the order response.

The issuance control unit 113 generates a barcode indicating the order number included in the order response transmitted from the management server 40, and instructs the issuing unit 160 to print the generated barcode on a sheet of paper, which is issued as the reception voucher V.

The operation unit 120 is constituted by a touch panel or the like formed on the display 11 shown in Fig. 2, and receives operation input from the user. The display unit 130 is constituted by the display 11 shown in Fig. 2, and under the control of the control unit 110, the display unit 130 displays various images for prompting the user to follow an operation procedure while placing an order.

The communication unit 140 is constituted by a communication module that conforms to a LAN communication protocol, and under the control of the control unit 110, the communication unit 140 transmits and receives various data. In this embodiment in particular, the communication unit 140 transmits order information to the management server 40 and receives an order response transmitted by the management server 40.

The reading unit 150 is constituted by the media drive 12 and the connector 13 shown in Fig. 2, and under the control of the control unit 110, the reading unit 150 obtains image data that the user wishes to be subjected to photograph printing. The issuing unit 160 is constituted by the reception voucher printer 15 shown in Fig. 2, and issues the reception voucher V.

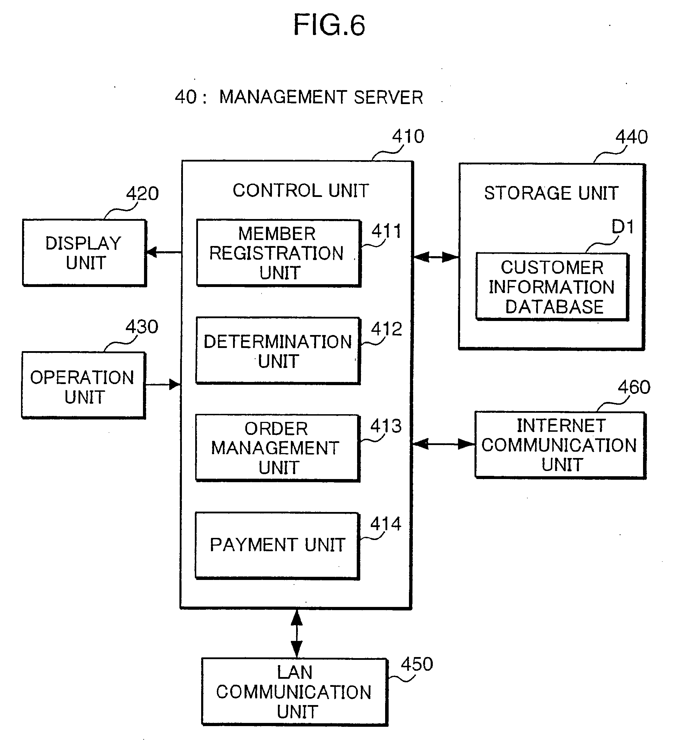

Fig. 6 is a block diagram of the management server 40 shown in Fig. 1. The management server 40 includes a control unit 410, a display unit 420, an operation unit 430, a storage unit 440, a LAN communication unit 450, and an Internet communication unit 460. The control unit 410 is constituted by a CPU, for example, and is responsible for overall control of the management server 40. The control unit 410 includes a member registration unit 411, a determination unit 412, an order management unit 413, and a payment unit 414.

After receiving member registration request information transmitted from the terminal device 50 as the user performs member registration, the member registration unit 411 issues identification information relating to the user who placed the member registration request and transmits the issued identification information to the terminal device 50. Further, the member registration unit 411 writes personal information included in the member registration request information to a customer information database D1, which is stored in the storage unit 440, in association with the issued identification information, whereby the user who issued the member registration request is registered as a member. Here, member registration means registering a user in a body organized by the photograph developing store, for example.

More specifically, after receiving member registration request information from the Internet communication unit 460, the member registration unit 411 generates a new record in the customer information database D1, and stores the issued identification information and the information stored in each column of the received member registration request information in corresponding columns of the generated record. Note that the member registration request information includes the personal information shown in Fig. 4. Thus, the member registration unit 411 stores the information stored in the respective personal information columns (name, age, occupation, address, telephone number, electronic payment information) in the respective columns of the generated record.

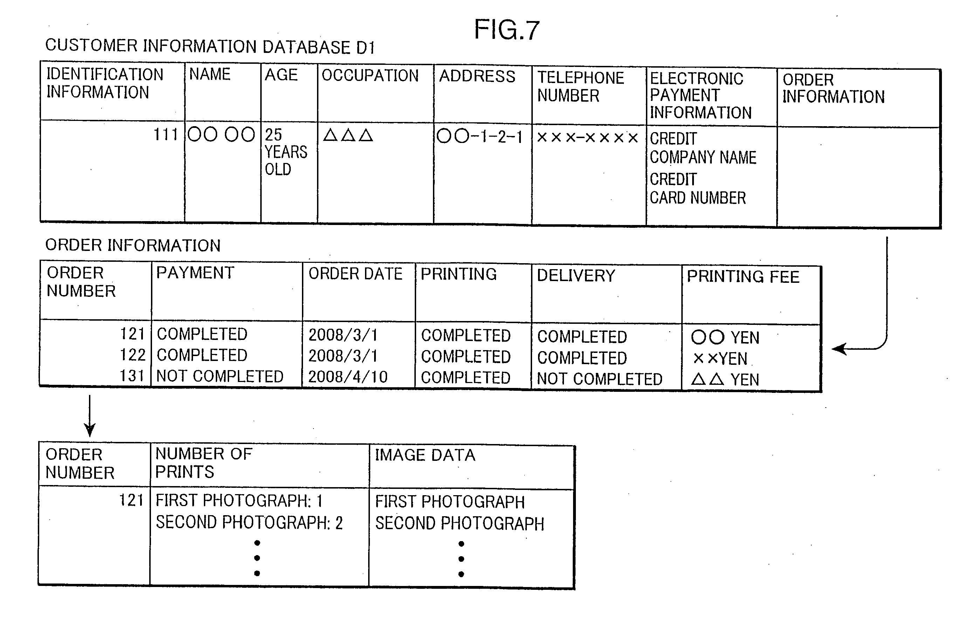

Fig. 7 is a view showing an example of a data structure of the customer information database D1 stored by the storage unit 440. As shown in Fig. 7, the customer information database D1 is constituted by a relational database in which a single record is allocated to each user, and includes columns relating to identification information, name, age, occupation, address, telephone number, electronic payment information, and order information. Note that these columns are examples and may be omitted or supplemented with other columns.

The identification information allocated to the user is stored in the identification information column. Identical information to the information stored in the respective personal information columns shown in Fig. 4 is stored in the columns extending from the name column to the electronic payment information column, and therefore description thereof has been omitted.

The order information column further includes columns relating to order number,payment,order date,printing,delivery, and printing fee. The order number attached to the order is stored in the order number column. Information indicating whether or not electronic payment has been completed in relation to the respective orders is stored in the payment column. In the example shown in Fig. 7, the information "completed" is stored in the payment column of orders having order numbers 121 and 122, indicating that electronic payment has been completed. On the other hand, the information "not completed" is stored in the payment column of an order having an order number 131, indicating that electronic payment has not been completed.

Information indicating the reception time, day, month, and year (the time is not shown in the drawing) of each order is stored in the order date column. Information indicating whether or not photograph printing has been completed is stored in the printing column. Information indicating whether or not the printed photographs relating to each order have been delivered to the user is stored in the delivery column.

The information "completed" is stored in the delivery column of the order numbers 121, and 122, indicating that the printed photographs relating to these orders have been delivered to the user. On the other hand, the information "not completed" is stored in the delivery column of the order number 131, indicating that the printed photographs relating to this order have not been delivered to the user. The printing fee for the order is stored in the printing fee column.

The order number column further includes a print number column and an image data column. Information indicating the number of prints of each set of image data is stored in the print number column. In the example shown in Fig. 7, the number of prints of a first set of image data is one, and the number of prints of a second set of image data is two. One or a plurality of sets of image data included in the order is stored in the image data column.

Returning to Fig. 6, the determination unit 412 determines whether or not the user who inputted the identification information is a registered user by determining whether or not the identification information transmitted from the reception device 10 is stored in the customer information database D1, and transmits a corresponding determination result to the reception device 10.

The order management unit 413 manages the order by writing the order information transmitted from the reception device 10 to the customer information database D1 in association with the identification information of the user who placed the order.

More specifically, after receiving order information relating to a registered user from the reception device 10, the order management unit 413 attaches an order number to the received order information, specifies the record of the user who placed the order in the customer information database D1 from the identification information included in the order information, and stores the image data, print number and order date included in the order information in the corresponding columns of the specified record.

Further, after receiving order information relating to an unregistered user from the reception device 10, the order management unit 413 attaches an order number, similarly to the case of a registered user, and then stores the data included in the order information input from the reception device 10 in a customer information database for unregistered users (not shown).

In this case, for example, a steadily larger numeral is allocated to the order number as the time, day, month and year stored in the order date of the order information become more recent, regardless of whether the order is placed by a registered user or an unregistered user.

Further, the order management unit 413 transmits the image data to the photograph printing device 20 in order units and in order number sequence, whereupon the photograph printing device 20 prints the image data included in the order.

Further, upon reception of notification from the photograph printing device 20 that photograph printing in relation to a certain order is complete, the order management unit 413 stores the information "completed" in the printing column of the order in the customer information database D1.

Further, upon reception of notification from the delivery device 30 that the printed photographs relating to a certain order have been delivered to the user, the order management unit 413 stores the information "completed" in the delivery column of the order in the customer information database D1.

Further, when electronic payment for a certain order has been completed by the payment unit 414, the order management unit 413 stores the information "completed" in the payment column of the order in the customer information database D1.

Further, after receiving order information from the terminal device 50, the order management unit 413 attaches an order number and stores the received order information in the customer information database D1, similarly to a case in which order information relating to an unregistered user is received from the reception device 10.

When a predetermined fee collection day arrives, the payment unit 414 calculates a total printing fee per user in relation to unpaid orders on the basis of the order information stored in the customer information database D1, and performs electronic payment for each user from the banking institution specified by the user.

In this case, the payment unit 414 determines that payment has not been completed in relation to orders for which the information "not completed" is stored in the payment column of the order information shown in Fig. 7, and determines that payment has been completed in relation to orders for which the information "completed" is stored in the same column. Further, a predetermined day of each month may be employed as the predetermined fee collection day.

The total printing fee is calculated by specifying the printing fees of orders for which the information "not completed" is stored in the payment column of the order information from the printing fee column of the order information and totaling the specified printing fees.

Further, electronic payment is performed by specifying the banking institution server 70 managed by the credit card company corresponding to the credit card company information stored in the electronic payment information column and transmitting a payment request including the credit card number and the printing fee to the banking institution server 70. Note that a communication address and the like of the banking institution server 70 are stored in the storage unit 440 in advance.

The display unit 420 is constituted by a display device such as a liquid crystal display or a plasma display, and displays various information under the control of the control unit 410. The operation unit 430 is constituted by an input device such as a keyboard or a mouse, and receives various operation commands from the user. The storage unit 440 is constituted by rewritable non-volatile memory, and stores the customer information database D1.

The LAN communication unit 450 is constituted by a communication device that conforms to the LAN communication protocol, and serves as a communication interface with the various devices connected to the LAN. In this embodiment in particular, the LAN communication unit 450 receives order information transmitted from the reception device 10 and transmits image data to the photograph printing device 20.

The Internet communication unit 460 is constituted by a communication device that conforms to an Internet communication protocol, and serves as a communication interface with the various devices connected to the network NT. In this embodiment in particular, the Internet communication unit 460 receives a member registration request transmitted from the terminal device 50 and transmits identification information to the terminal device 50.

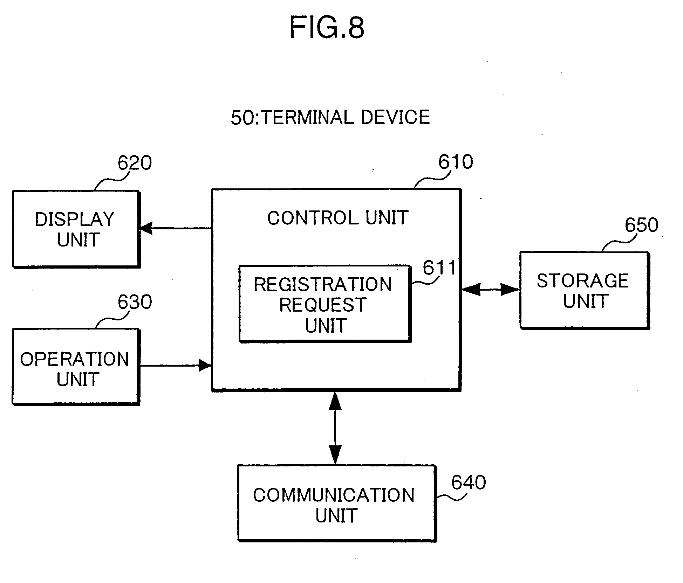

Fig. 8 is a block diagram of the terminal device 50 shown in Fig. 1. The terminal device 50 is constituted by a computer disposed in the home of the user, for example, and includes a control unit 610, a display unit 620, an operation unit 630, a communication unit 640, and a storage unit 650. The control unit 610 is constituted by a CPU, for example, and includes a registration request unit 611.

The registration request unit 611 receives member registration request information including the personal information of the user, which is input by the user by operating the operation unit 630, and transmits the member registration request information to the management server 40. Here, for example, the registration request unit 611 accesses the management server 40 in accordance with operation input from the user using the operation unit 630, instructs the management server 40 to download an image prompting the user to input information required to issue a member registration request, displays the image on the display unit 620, and receives the information that is input in accordance with the image as the member registration request information.

The display unit 620 is constituted by a display device such as a liquid crystal display or a plasma display, and displays various images under the control of the control unit 610. The operation unit 630 is constituted by an input device such as a keyboard or a mouse, and receives various operation input from the user.

The communication unit 640 is constituted by a communication device that conforms to an Internet communication protocol, and serves as a communication interface with the network NT. The storage unit 650 is constituted by a storage device such as a hard disk, and stores an operating system and so on.

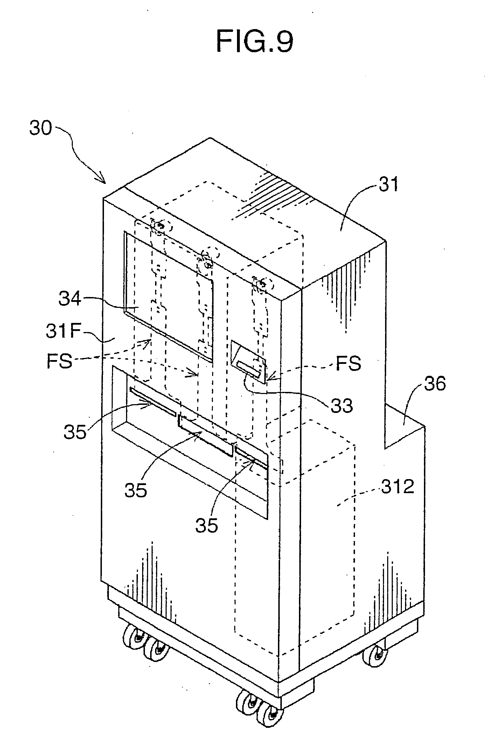

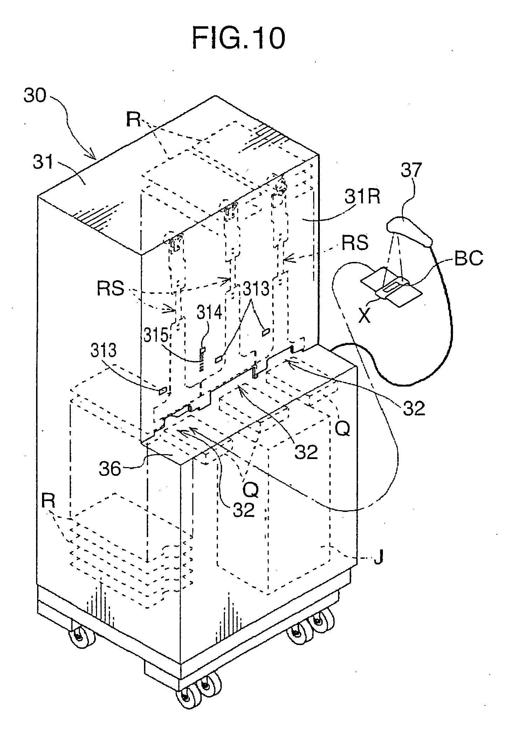

Figs. 9 and 10 are external constitutional diagrams of the delivery device 30 shown in Fig. 1. As shown in Figs. 9 and 10, printed photographs bound by a band X and inserted through an insertion opening 32 formed in a rear surface 31R (rear side) of a housing 31 of the delivery device 30 are carried on one of a plurality of racks R in the interior of the housing 31. When the user holds the reception voucher V against a fixed barcode reader 33 provided on a front surface 31F (front side), the delivery device 30 reads the barcode printed on the reception voucher V to obtain the order number.

The delivery device 30 then specifies the rack R carrying the printed photographs corresponding to the obtained order number, positions the specified rack R in a discharge opening 35 formed in the front surface 31F of the housing 31, and slides a push-out mechanism Q to the front side such that the printed photographs carried on the rack R are discharged from the discharge opening 35. Thus, the user can receive the ordered printed photographs.

Here, the band X is wound around the printed photographs of each order, whereupon the printed photographs are inserted into the insertion opening 32 by a staff member of the photograph developing store. Further, a barcode BC indicating the order number, the order number, the user name, and so on are printed on the band X. The staff member uses the barcode reader 37 to read the barcode BC when inserting the printed photographs, thereby enabling the delivery device 30 to obtain the order number. Further, a rack address is allocated to each rack R.

Hence, when the printed photographs are inserted, the delivery device 30 can associate the order number obtained by the barcode reader 37 with the rack address of the rack R carrying the printed photographs, and thus the delivery device 30 can manage the racks R and the order numbers of the printed photographs carried thereon.

A front portion shutter FS opens and closes the discharge opening 35. A rear portion shutter RS opens and closes the insertion opening 32. A table portion 36 guides the printed photographs bound by the band X to the insertion opening 32. Amonitor 34 displays various images prompting the user to receive the printed photographs. An elevation frame 312 raises and lowers the racks R. An insertion position guidance lamp 313 shows the staff member the insertion opening 32 into which the printed photographs should be inserted. In this embodiment, three racks R are provided in series, and therefore three insertion openings 32 and three discharge openings 35 are provided.

A reception operation lamp 314 is illuminated when the user performs an operation to extract the printed photographs. A full lamp 315 is illuminated when no empty racks R are available. A control unit J is responsible for overall control of the delivery device 30.

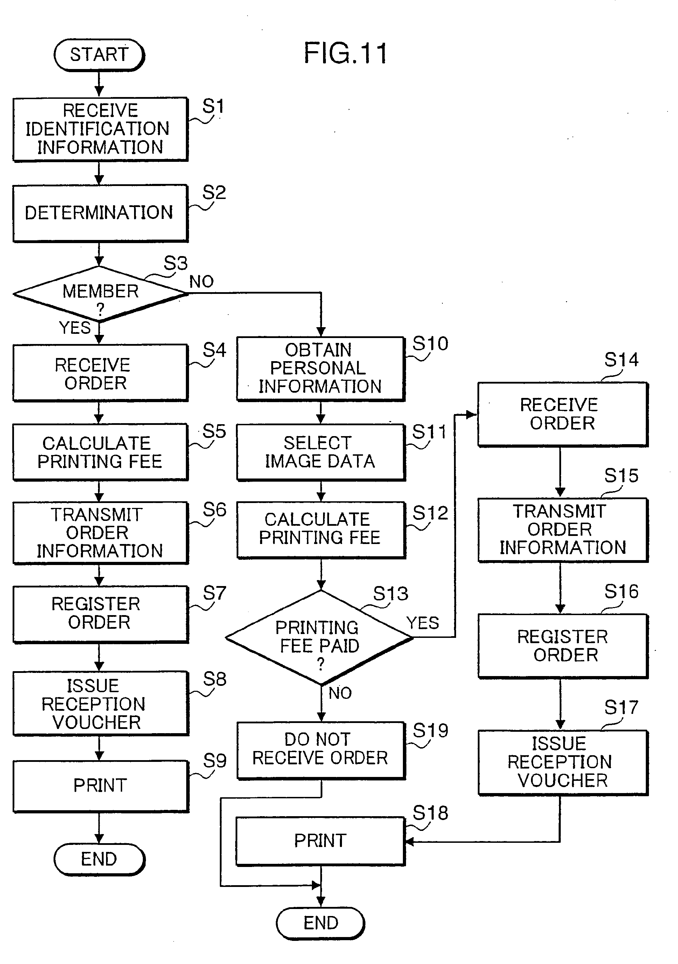

Next, an operation performed when the photograph printing system receives an order will be described. Fig. 11 is a flowchart showing an operation of the photograph printing system during order placement. First, the reception device 10 receives identification information input by a user (step S1), and transmits the received identification information to the management server 40.

Next, the management server 40 determines whether or not the user who inputted the identification information is a registered user by determining whether or not the identification information is stored in the customer information database D1 (step S2). Here, after determining that the user who inputted the identification information is a registered user, the management server 40 transmits information indicating that the user is a registered user to the reception device 10 as a determination result, and after determining that the user is not a registered user, the management server 40 transmits information indicating that the user is an unregistered user to the reception device 10 as the determination result.

When the management server 40 determines that the user who inputted the identification information is a registered user (YES in a step S3), the reception device 10 receives the photograph printing order from the user without prompting the user to input personal information (step S4). In this case, the reception device 10 displays an image prompting the user to insert the medium M into the media drive 12 or connect the portable telephone T to the connector 13 on the display 11 such that the medium M is inserted into the media drive 12 or the portable telephone T is connected to the connector 13, and thereby obtains the image data stored on the medium M or the portable telephone T.

The reception device 10 then displays the obtained image data on the display 11 as a list of thumbnails or the like, and displays an operation image prompting the user to select the image data to be printed as photographs and the number of prints of each set of image data, whereby the user is caused to select the image data and the number of prints of each set of image data. The reception device 10 then generates the order information shown in Fig. 5 from the image data and the number of prints of each set of image data selected by the user, and transmits the generated order information to the management server 40.

Note that the operation image for prompting a registered user and a recognized user to select the image data and the number of prints of each set of image data is preferably exactly the same as an operation image displayed at all times while the user places an order from the terminal device 50. Thus, the user can perform the operation using a familiar operation image, and as a result, the input load placed on a registered user during order placement can be reduced greatly such that a new service can be provided to the registered user.

Next, the reception device 10 calculates a printing fee for the received order (step S5). In this case, the reception device 10 may inform the user of the printing fee by displaying the calculated printing fee on the display 11.

Next, the reception device 10 generates the order information shown in Fig. 5 using the order received in the step S4 and the printing fee calculated in the step S5, and transmits the generated order information to the management server 40 (step S6).

Next, the management server 40 registers the order by attaching an order number to the order relating to the received order information and storing the order information in the customer information database D1 (step S7). In this case, the management server 40 transmits an order response including the attached order number to the reception device 10.

Next, the reception device 10 receives the order response from the management server 40 and issues a reception voucher V displaying the order number included in the order response in the form of a barcode (step S8) . Thus, the user obtains the reception voucher V.

Next, the management server 40 transmits the image data relating to the registered order to the photograph printing device 20 and causes the photograph printing device 20 to print the image data relating to the order (step S9).

Meanwhile, when the user who inputted the identification information is determined to be an unregistered user by the management server 40 (NO in the step S3), the reception device 10 prompts the unregistered user to input personal information, whereby the personal information is obtained (step S10).

In this case, the reception device 10 displays an image prompting the unregistereduser to input the personal information shown in Fig. 4 on the display 11, and obtains the personal information by having the unregistered user operate the operation unit 120.

Next, the reception device 10 prompts the unregistered user to select image data relating to the order received from the unregistered user (step S11). In this case, the reception device 10 may prompt the user to select image data relating to the order by displaying a similar operation image to that of the step S4 on the display 11. By displaying a similar operation image to that of the step S4 , the operation image can be used for two purposes, thereby reducing the development cost of the reception device 10 and increasing the available memory area of the reception device 10.

Next, the reception device 10 calculates the printing fee for the order from the number of prints of the image data selected in the step S11 (step S12) . When the printing fee has been paid by the user (YES in a step S13), the reception device 10 receives the order (step S14).

Next, the reception device 10 generates order information using the image data selected in the step S11, the printing fee calculated in the step S12, the number of prints of each set of image data, the order date, the identification information, and so on, and transmits the generated order information to the management server 40 (step S15).

Next, the management server 40 attaches an order number to the order relating to the received order information and registers the order by storing the order information in the unregistered user customer information database (step S16). In this case, the management server 40 transmits an order response including the attached order number to the reception device 10.

Next, the reception device 10 receives the order response from the management server 40 and issues a reception voucher V displaying the order number included in the order response in the form of a barcode (step S17). Thus, the user obtains the reception voucher V.

Next, the management server 40 transmits the image data relating to the order to the photograph printing device 20 and causes the photograph printing device 20 to print the image data relating to the order (step S18).

Meanwhile, when the printing fee has not been paid to the reception device 10 in the step S13 (NO in the step S13), the processing is terminated without receiving the order (step S19). In this case, the reception device 10 may determine that the printing fee has not been paid when the printing fee is not paid by the user following the elapse of a predetermined time period from display of the image for prompting the user to pay the printing fee on the display 11, or when the user refuses to pay the printing fee by pressing a cancel button or the like.

Note that the printed photographs printed by the photograph printing device 20 in the step S9 and the step S18 are bound by the band X and inserted into the delivery device 30 by a staff member. The user then visits the store on or after a due date for completing printing of the printed photographs carrying the reception voucher V, holds the reception voucher V against the fixed barcode reader 33 of the delivery device 30, and extracts the printed photographs.

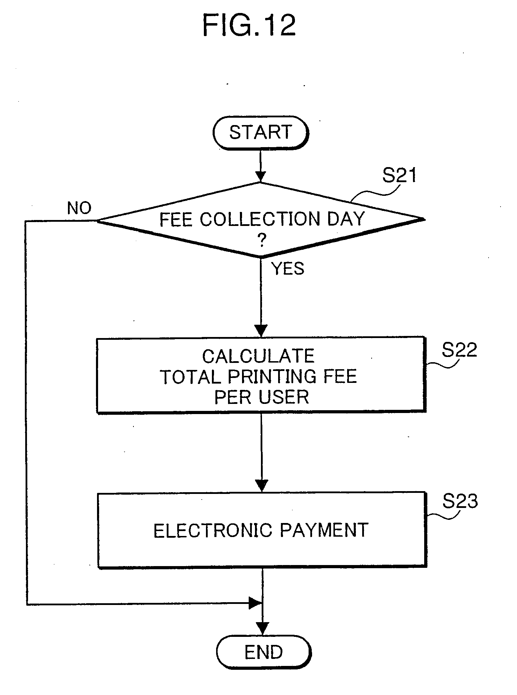

Next, processing performed by the photograph printing system during payment will be described. Fig. 12 is a flowchart showing an operation of the photograph printing system performed during payment.

First, when the predetermined fee collection day arrives (YES in a step S21), the management server 40 calculates a total printing fee relating to the unpaid orders of each user (step S22). When the predetermined fee collection day has not arrived (NO in the step S21), on the other hand, the management server 40 does not execute payment processing. Next, the management server 40 performs electronic payment by accessing the banking institution server 70 of the credit card company specified by each user from the electronic payment information of each user (step S23).

Hence, according to this photograph printing system, a registered user who has completed member registration can place an order without inputting personal information when placing the order using the reception device 10, and as a result, the input load applied to the registered user during order placement using the reception device 10 can be reduced greatly.

Note that in the embodiment described above, the management server 40 attaches the order number, but the order number may be attached by the reception device 10. Further, the printed photographs are bound by the band X, but the present invention is not limited thereto, and the printed photographs may be inserted into a DP bag. Further, the fee payment device 60 is connected to the reception device 10 via the LAN, but the reception device 10 may be provided with a fee payment function such that the reception device 10 and the fee payment device 60 are constituted integrally.

Further, in the embodiment described above, the user accesses the management server 40 when performing member registration, but the present invention is not limited thereto, and the website of the photograph developing store may be provided on a web server of the Internet such that the user performs member registration by accessing this website. In this case, the management server 40 may perform member registration by receiving the personal information of the user via the website.

Furthermore, in the embodiment described above, the band X is wound around the output printed photographs by the staff member, but a device for binding the printed photographs output from the photograph printing device 20 may be provided such that the band X is wound automatically by the binding device. Further, a conveyance mechanism may be provided in the binding device such that the processes from binding of the printed photographs output from the photograph printing device 20 to insertion thereof into the delivery device 30 are performed automatically. Moreover, the present invention is not limited to a case in which the printed photographs are bound by the band X, and the printed photographs may be inserted into a conventional carrier bag.

The technical features of the photograph printing system described above can be summarized as follows.
(1) The photograph printing system described above is a photograph printing system in which a reception device, a management server, and a photograph printing device are connected via a predetermined network, wherein the reception device includes: an identification information reception unit that receives identification information from a user for identifying the user and transmits the identification information to the management server via the network; and an order reception unit that receives an order for photograph printing from the user, the management server includes: a storage unit that stores identification information relating to registered users who have completed member registration in advance in association with personal information relating to each registered user; and a determination unit that determines whether or not the user who inputs the identification information is a registered user by determining whether or not the identification information transmitted from the reception device is stored in the storage unit, and transmits a corresponding determination result to the reception device. After receiving a determination result indicating that the user who inputted the identification information is a registered user, the order reception unit receives the order for photograph printing from the user without prompting the user to input the personal information, and the photograph printing device performs photograph printing in accordance with the order received by the order reception unit.
   According to this constitution, when a registered user who has completed member registration places an order using the reception device, the order can be placed without inputting personal information, and therefore the input load placed on the registered user during order placement using the reception device can be reduced greatly.
(2) The personal information of each of the registered users preferably includes predetermined electronic payment information required to perform electronic payment for the order.
   According to this constitution, information specifying a banking institution used to perform electronic payment is included in the personal information, and therefore, when an order for photograph printing is placed on the reception device, the labor required to input this information is omitted, enabling a great reduction in the input load on the registered user.
(3) When an order is placed by an unregistered user who has not completed the member registration, the order reception unit of the reception device preferably receives the order on condition that a printing fee for the order is paid on the spot and personal information relating to the unregistered user is input, and when an order is placed by the registered user, the order reception unit preferably receives the order without receiving the printing fee for the order on the spot.
   According to this constitution, the need for the registered user to pay the printing fee at the time of order placement is eliminated, enabling a great reduction in the input load.
(4) The order reception unit of the reception device preferably transmits order information indicating an order placed by a registered user to the management server, and the management server preferably further includes: an order management unit that manages the order by storing the order information transmitted from the reception device in the storage unit in association with the identification information relating to the user who placed the order; and a payment unit which, when a predetermined fee collection day arrives, calculates a total printing fee per user in relation to unpaid orders on the basis of the order information stored in the storage unit, and performs electronic payment for each user from a banking institution specified by each user.
   According to this constitution, when the predetermined fee collection day arrives, a total printing fee per user is calculated in relation to unpaid orders, and electronic payment is performed from a banking institution specified by the user. Therefore, the number of electronic payments can be reduced in comparison with a case in which electronic payment is performed every time an order is placed, enabling a reduction in management labor.
(5) The photograph printing system preferably further includes a terminal device that is owned by a user and connected via the network, the terminal device preferably includes a registration request unit that receives member registration request information including the personal information of the user and transmits the member registration request information to the management server, and the management server preferably further includes a member registration unit which, after receiving the member registration request information transmitted from the terminal device, issues identification information relating to the user requesting member registration, transmits the identification information to the terminal device, and stores the personal information included in the member registration request information in the storage unit in association with the issued identification information, whereby the user requesting member registration is registered as a member.
   According to this constitution, the user can perform member registration using a home terminal device such that when the user places an order using the reception device thereafter, he/she does not have to input personal information, and as a result, the input load on the user can be reduced greatly.
(6) The order management unit of the management server, after receiving the order information, preferably attaches an order number to the order information and transmits an order response including the order number to the reception device, and the reception device preferably further includes an issuing unit that issues a reception voucher printed with the order number included in the order response transmitted from the management server.
   According to this constitution, a reception voucher printed with an order number is issued during order placement, and therefore the user can obtain proof of the order easily.
(7) The photograph printing system preferably further includes a delivery device that reads the order number printed on the reception voucher and discharges a printed photograph corresponding to the order number.
   According to this constitution, the user can receive the ordered printed photograph simply by causing the delivery device to read the order number printed on the reception voucher.
(8) The issuing unit preferably prints a barcode indicating the order number, and the delivery device preferably reads the order number using a barcode reader.
   According to this constitution, the delivery device reads the order number printed in the form of a barcode on the reception voucher using the barcode reader, and therefore the order number can be read accurately.

This application is based on Japanese patent application serial no. 2008-084607, filed in Japan Patent Office on March 27, 2008, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A photograph printing system in which a reception device, a management server, and a photograph printing device are connected via a predetermined network, wherein the reception device comprises:
an identification information reception unit that receives identification information from a user for identifying the user and transmits the identification information to the management server via the network; and
an order reception unit that receives an order for photograph printing from the user,
the management server comprises:
a storage unit that stores identification information relating to registered users who have completed member registration in advance in association with personal information relating to each registered user; and
a determination unit that determines whether or not the user who inputs the identification information is a registered user by determining whether or not the identification information transmitted from the reception device is stored in the storage unit, and transmits a corresponding determination result to the reception device,
after receiving a determination result indicating that the user who inputted the identification information is a registered user, the order reception unit receives the order for photograph printing from the user without prompting the user to input the personal information, and
the photograph printing device performs photograph printing in accordance with the order received by the order reception unit.

2. The photograph printing system according to claim 1, wherein the personal information of each of the registered users includes predetermined electronic payment information required to perform electronic payment for the order.

3. The photograph printing system according to claim 1 or 2, wherein, when an order is placed by an unregistered user who has not completed the member registration, the order reception unit of the reception device receives the order on condition that a printing fee for the order is paid on the spot and personal information relating to the unregistered user is input, and when an order is placed by the registered user, the order reception unit receives the order without receiving the printing fee for the order on the spot.

4. The photograph printing system according to any of claims 1 to 3, wherein the order reception unit of the reception device transmits order information indicating an order placed by a registered user to the management server, and
the management server further comprises:
an order management unit that manages the order by storing the order information transmitted from the reception device in the storage unit in association with the identification information relating to the user who placed the order; and
a payment unit which, when a predetermined fee collection day arrives, calculates a total printing fee per user in relation to unpaid orders on the basis of the order information stored in the storage unit, and performs electronic payment for each user from a banking institution specified by each user.

5. The photograph printing system according to any of claims 1 to 4, further comprising a terminal device that is owned by a user and connected via the network,
wherein the terminal device comprises a registration request unit that receives member registration request information including the personal information of the user and transmits the member registration request information to the management server, and
the management server further comprises a member registration unit which, after receiving the member registration request information transmitted from the terminal device, issues identification information relating to the user requesting member registration, transmits the identification information to the terminal device, and stores the personal information included in the member registration request information in the storage unit in association with the issued identification information, whereby the user requesting member registration is registered as a member.

6. The photograph printing system according to claim 4, wherein the order management unit of the management server, after receiving the order information, attaches an order number to the order information and transmits an order response including the order number to the reception device, and
the reception device further comprises an issuing unit that issues a reception voucher printed with the order number included in the order response transmitted from the management server.

7. The photograph printing system according to claim 6, further comprising a delivery device that reads the order number printed on the reception voucher and discharges a printed photograph corresponding to the order number.

8. The photograph printing system according to claim 7, wherein the issuing unit prints a barcode indicating the order number, the delivery device reads the order number using a barcode reader.
